Europäisches Patentamt

European Patent Office

Office européen des brevets

(11) Veröffentlichungsnummer: **0 062 232**
**A1**

## (12) EUROPÄISCHE PATENTANMELDUNG

(21) Anmeldenummer: 82102432.0

(22) Anmeldetag: 24.03.82

(51) Int. Cl.³: **C 02 F 1/74**, C 02 F 1/72

(30) Priorität: 04.04.81 DE 3113738

(43) Veröffentlichungstag der Anmeldung: 13.10.82
Patentblatt 82/41

(84) Benannte Vertragsstaaten: AT BE CH IT LI SE

(71) Anmelder: **Fried. Krupp Gesellschaft mit beschränkter Haftung, Altendorfer Strasse 103, D-4300 Essen 1 (DE)**

(72) Erfinder: **Höke, Engelbert, Juistweg 54, D-4300 Essen 1 (DE)**

(54) Vorrichtung zur Abwasserreinigung.

(57) Vorrichtung zur Reinigung von Abwasser durch Oxidation der Abwasserinhaltstoffe mit sauerstoffhaltigen Gasen oder Sauerstoff in Gegenwart fester Katalysatorteilchen bei Normaldruck und Umgebungstemperatur, die aus einem runden zylindrischen Reaktionsturm (1) besteht, der oben eine Ablaufeinrichtung (2) aufweist und mit einem konischen Boden (3) sowie mindestens einem Steigrohr (4) versehen ist. Im unteren Teil des konischen Bodens (3) befindet sich für jedes Steigrohr (4) eine als Zulaufeinrichtung und Strömungserzeuger wirkende Flüssigkeitstreibdüse (5). In jedem Steigrohr (4) sind 3 bis 4,5 m unterhalb der Wasseroberfläche (6) Belüftungseinrichtungen (7) angeordnet, durch die in das Abwasser Sauerstoff eingetragen und die Abwasserströmung gefördert wird. In vielen Fällen ist es vorteilhaft, daß mehrere Reaktionstürme (1) hintereinander geschaltet sind.

0062232

FRIED. KRUPP GESELLSCHAFT MIT BESCHRÄNKTER HAFTUNG
in Essen

Vorrichtung zur Abwasserreinigung

Die Erfindung betrifft eine Vorrichtung zur Reinigung
von Abwasser durch Oxidation der Abwasserinhaltstoffe
mit sauerstoffhaltigen Gasen oder Sauerstoff in
Gegenwart fester Katalysatorteilchen bei Normaldruck
und Umgebungstemperatur.

Aus der DE-PS 20 50 874 ist ein Verfahren zur Reinigung von Abwässern bekannt, die mit emulgierten und
gelösten oxidierbaren organischen und anorganischen
Substanzen verunreinigt sind. Bei diesem bekannnten
Verfahren werden die zu reinigenden Abwässer in Gegenwart eines Aktivkohle- oder Ionenaustauscher-
Katalysators mit Luft vermischt, und die in den Abwässern enthaltenen oxidierbaren Substanzen werden
durch eine katalysierte Oxidationsreaktion bei Normaldruck und Umgebungstemperatur, also bei ca. 1 bar
und ca. 5 bis $50^{\circ}C$, abgebaut. Dieses Reinigungsverfahren wird in einer mit dem Katalysator gefüllten
Reaktionskammer durchgeführt, an deren Boden Belüftungsdüsen angeordnet sind, durch die in das Abwasser sauerstoffhaltige Gase eingebracht werden. Der
Reaktionskammer wird kontinuierlich Abwasser zugeführt und gereinigtes Abwasser entnommen. Die Katalysatorteilchen werden durch die Strömung des Abwassers und der Luft in der Schwebe gehalten und
verwirbelt, so daß den Reaktionspartnern ständig
eine ausreichend große Katalysatoroberfläche angeboten wird. Es wurde auch vorgeschlagen, die

0062232

Reaktionskammer mit einem Rührwerk oder einer Umwälzpumpe auszustatten, um die katalysierte Oxidationsreaktion zu beschleunigen.

Die bekannte Reaktionskammer hat den Nachteil, daß sie zur Aufrechterhaltung des Kataysator-Wirbelbetts größere Energiemengen benötigt, die durch den Luftstrom eingebracht werden müssen. Es werden ca. 5 $m^3$ Luft pro $m^3$ Belüfungsraum benötigt. Außerdem wird durch den kräftigen Luftstrom immer ein gewisser Teil des Katalysators in unerwünschter Weise zerrieben. Durch den Einsatz von Rührwerken konnte zwar die erforderliche Luftmenge zur Aufrechterhaltung des Katalysator-Wirbelbetts, nicht aber der Katalysatorabrieb reduziert werden. Auch das Umpumpen des Katalysator-Abwasser-Gemischs zum Zweck der Wirbelbetterzeugung hat sich nicht bewährt, da der Katalysatorabrieb zu stark ist. Außerdem ist die von den Rührwerken und Pumpen benötigte Energiemenge größer als die Energiemenge, die mit der Verminderung der Luftmenge durch den Einsatz von Rührwerken und Pumpen eingespart wird.

Daher liegt der Erfindung die Aufgabe zugrunde, eine Vorrichtung zur Durchführung der katalytisch-oxidativen Abwasserreinigung zu schaffen, die zur Erzeugung des Katalysator-Wirbelbetts und der Abwasserströmung möglichst wenig Energie bzw. Luft benötigt und in der die Zerstörung der Katalysatorteilchen durch Abrieb stark eingeschränkt ist.

Diese Aufgabe wird nach der Erfindung durch eine Vorrichtung gelöst, die aus einem runden zylindrischen Reaktionsturm besteht, der oben eine Ablaufeinrichtung aufweist und mit einem konischen Boden sowie mindestens einem Steigrohr versehen ist, wobei sich im unteren Teil des konischen Bodens für jedes Steigrohr eine als Zulaufeinrichtung und Strömungserzeuger wirkende Flüssigkeitreibdüse befindet und wobei in jedem Steigrohr 3 bis 4,5 m unterhalb der Wasseroberfläche Belüftungseinrichtungen angeordnet sind, durch die in das Abwasser Sauerstoff eingetragen und die Abwasserströmung gefördert wird. Durch den Einsatz der erfindungsgemäßen Vorrichtung wird der Abrieb der Katalysatorteilchen um 50 % gegenüber dem Abrieb in der bekannten Reaktionskammer gesenkt. Dadurch wird es möglich, daß in der erfindungsgemäßen Vorrichtung Katalysatoren mit einer geringeren Abriebfestigkeit und einem kleineren spezifischen Gewicht verwendet werden können. Ferner benötigt die erfindungsgemäße Vorrichtung zur Belüftung und Umwälzung des Abwassers sowie zur Erzeugung des Katalysator-Wirbelbetts ca. 20 bis 90 Watt/m$^3$ Abwasser, während dazu in der bekannten Reaktionskammer 120 bis 150 Watt/m$^3$ Abwasser erforderlich sind. Außerdem wird durch die konische Form des Bodens eine unerwünschte Katalysatorablagerung vermieden. Schließlich sind für den Aufbau der erfindungsgemäßen Vorrichtung wegen ihrer geringen Grundfläche nur kleine Grundstücke erforderlich.

Wenn kleinere Vorrichtungen eingesetzt werden müssen, wenn bei der Abwasserreinigung nacheinander verschiedene Katalysatoren verwendet werden sollen und/oder wenn zur Abwasserreinigung längere Reaktionszeiten erforderlich sind, ist in weiterer Ausgestaltung der Erfindung vorgesehen, daß mehrere Reaktionstürme hintereinander geschaltet werden. Die erfindungsgemäße Vorrichtung hat einen optimalen, geringen Energieverbrauch und Katalysatorabrieb, wenn der Reaktionsturm eine Höhe $H_r$ von 15 bis 40 m und einen Durchmesser $D_r$ von 3 bis 8 m hat, wobei das Verhältnis von $D_r : H_r$ zwischen 1 : 5 und 1 : 10 liegt, wenn die Summe der Steigrohrdurchmesser $D_s$ = 0,55 bis 0,65 . $D_r$ beträgt und wenn jedes einzelne Steigrohr einen Durchmesser $D_{se}$ von 0,5 bis 2 m sowie eine Höhe $H_{se}$ von 7 bis 8.$D_s$ aufweist. Nach der Erfindung ist es also besonders vorteilhaft, wenn größere Vorrichtungen mit mehreren Steigrohren versehen sind, da so eine gleichmäßige Strömung über einen größeren Querschnitt erzielt werden kann.

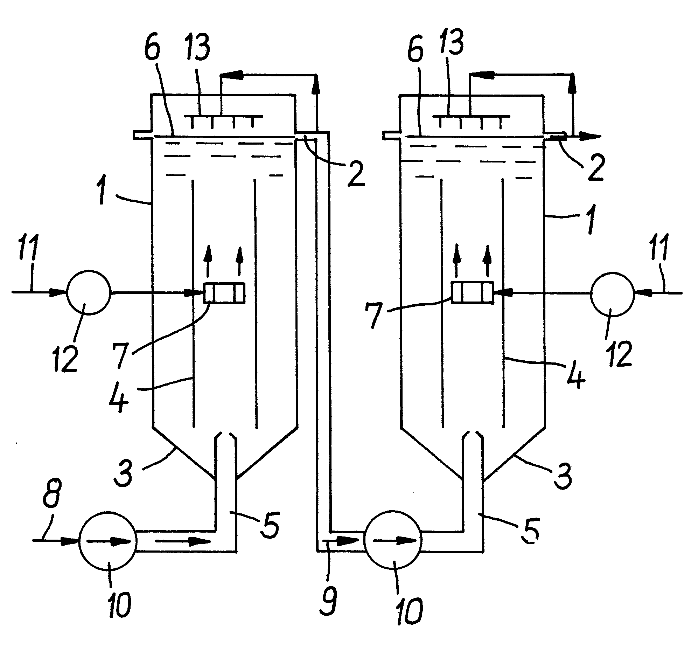

Der Gegenstand der Erfindung wird nachfolgend anhand der Zeichnung näher erläutert, in der eine Vorrichtung zur Abwasserreinigung dargestellt ist.

Die Vorrichtung zur Abwasserreinigung besteht aus zwei hintereinander geschalteten Reaktionstürmen 1, die eine runde und zylindrische Form haben. Beide Reaktionstürme 1 haben eine Höhe $H_r$ von 21 m und einen Durchmesser $D_r$ von 3 m. Das Verhältnis von $D_r$ zu $H_r$ beträgt 1 : 7. Oben an den Reaktionstürmen 1 sind die Ablaufrinnen 2 angeordnet, und unten befindet sich jeweils der konische Boden 3. In jedem Reaktionsturm 1 ist ein Steigrohr 4 angeordnet, das einen Durchmesser $D_s$ = $D_{se}$ von 0,6 . 3 m = 1,8 m sowie eine Höhe $H_{se}$ von 7,5 . 1,8 m = 13,3 m hat. Insbesondere bei einem größeren Durchmesser $D_d$ ist dieser auf mehrere Steigrohre aufzuteilen, da jedes Steigrohr nur einen Durchmesser $D_{se}$ von 0,5 bis 2 m haben soll. Beträgt $D_s$ beispielsweise 4,8 m, teilt man in zweckmäßig auf 4 Steigrohre mit einem Durchmesser von $D_{se}$ = 1,2 m auf.

In jedem Steigrohr 4 befindet sich ein Belüftungsring 7 mit mehreren Düsen. Der Durchmesser der Düsenöffnungen ist kleiner als der Durchmesser der Katalysatorteilchen. Der Belüftungsring 7 liegt 4 m unter der Wasseroberfläche 6, da in dieser Tiefe ein optimaler Sauerstoffeintrag und eine günstige Unterstützung der Wasserströmung erreicht werden. Unterhalb der Steigrohre 4 befindet sich jeweils eine Flüssigkeitstreibdüse 5, durch die das Abwasser 8 bzw. das vorgereinigte Abwasser 9 in den Reaktionsturm 1 fließt. Der Zulauf verläßt die Flüssigkeitstreibdüse 5 mit einer Geschwindigkeit von 10 bis 15 m/min. Durch die Strömung des Zulaufs werden die Katalysatorteilchen aus dem konischen Boden 3 emporgerissen, und es entsteht ein Katalysator-Wirbelbett im Steigrohr 4. Nach dem Verlassen des Steigrohres 4 kehrt sich die aufwärts gerichtete Strömungsrichtung des belüfteten Abwasser-Katalysator-Gemischs um, und führt abwärts, wobei die Katalysatorteilchen mit einer Geschwindigkeit von 4 bis 8 m/min. sinken. Das in den Reaktionstürmen 1 befindliche Wasser wird durch die Energie des Zulaufs ca. 15 bis 25 mal umgewälzt, bis es den Reaktionsturm 1 verläßt.

Das Abwasser 8 und das vorgereinigte Abwasser 9 werden durch die Pumpen 10 über die Flüssigkeitstreibdüsen 5 in die Reaktionstürme 1 gefördert. Die Luft 11 wird mit den Gebläsen 12 über die Belüftungsringe 7 in das Abwasser eingebracht. Dabei unterstützt die strömende Luft 11 die aufwärts gerichtete Strömung des Wassers. Der Sauerstoff wird im Abwasser gelöst und oxidiert Die Abwasserinhaltstoffe in einer katalysierten Reaktion.

Der Katalysatorabrieb wird mit dem vorgereinigten bzw. gereinigten Abwasser ausgetragen und durch eine geeignete Nachbehandlung (Flockung und Sedimentation oder Filtration) entfernt. Um Schaumbildung zu verhindern, wird ein Teilstrom des Ablaufs jedes Reaktionsturms 1 über eine drehbare Rieseleinrichtung 13 auf die Wasseroberfläche 6 gesprüht.

Die entsprechend der Erfindung gestaltete Vorrichtung hat sich insbesondere zur Reinigung hochbelasteter Industrieabwässer bewährt.

A n s p r ü c h e :

1. Vorrichtung zur Reinigung von Abwasser durch Oxidation der Abwasserinhaltstoffe mit sauerstoffhaltigen Gasen oder Sauerstoff in Gegenwart fester Katalysatorteilchen bei Normaldruck und Umgebungstemperatur, d a d u r c h g e k e n n z e i c h n e t , daß sie aus einem runden zylindrischen Reaktionsturm (1) besteht, der oben eine Ablaufeinrichtung (2) aufweist und mit einem konischen Boden (3) sowie mindestens einem Steigrohr (4) versehen ist, wobei sich im unteren Teil des konischen Bodens (3) für jedes Steigrohr (4) eine als Zulaufeinrichtung und Strömungserzeuger wirkende Flüssigkeitstreibdüse (5) befindet und wobei in jedem Steigrohr (4) 3 bis 4,5 m unterhalb der Wasseroberfläche (6) Belüftungseinrichtungen (7) angeordnet sind, durch die in das Abwasser Sauerstoff eingetragen und die Abwasserströmung gefördert wird.

2. Vorrichtung nach Anspruch 1, dadurch gekennzeichnet, daß mehrere Reaktionstürme (1) hintereinander geschaltet sind.

3. Vorrichtung nach den Ansprüchen 1 und 2, dadurch gekennzeichnet, daß der Reaktionsturm (1) eine Höhe $H_r$ von 15 bis 40 m und einen Durchmesser $D_r$ von 3 bis 8 m hat, wobei das Verhältnis von $D_r$ : $H_r$ zwischen 1 : 5 und 1 : 10 liegt.

4. Vorrichtung nach den Ansprüchen 1 bis 3, dadurch gekennzeichnet, daß die Summe der Steigrohrdurchmesser $D_s$ = 0,55 bis 0,65 . $D_r$ beträgt und daß jedes einzelne Steigrohr (4) einen Durchmesser $D_{se}$ von 0,5 bis 2 m sowie eine Höhe $H_{se}$ von 7 bis 8 . $D_s$ aufweist.

0062232

1/1

81/28

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| A | DD - A - 124 967 (ISTERI)<br>* Seite 4, Zeile 4 - Seite 5, Zeile 28; Seite 6, Zeilen 10-11; Fig. * | 1 |
| | -- | |
| A | DE - B - 1 212 903 (UNIVERSAL)<br>* Spalte 2, Zeilen 36-41 * | 1 |
| | -- | |
| A | DE - A - 2 105 420 (AEROBIC)<br>* Seite 1, Zeilen 1-4; Seite 7, Zeile 12 - Seite 9, Zeile 8; Fig. 3; Seite 16, Zeilen 3-4; Fig. 2 * | 1,2 |
| | -- | |
| A | DE - A1 - 2 710 109 (INDUSTRIAL)<br>* Seite 22, Zeilen 3-35; Fig. 9 * | 1,2 |
| | ---- | |

**KLASSIFIKATION DER ANMELDUNG (Int. Cl.³)**

C 02 F 1/74
C 02 F 1/72

**RECHERCHIERTE SACHGEBIETE (Int. Cl.³)**

C 02 F

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 03-06-1982 | WILFLINGER |

EPA form 1503.1  06.78